# EUROPEAN PATENT SPECIFICATION

(11) **EP 2 680 354 B1**
(45) Date of publication and mention of the grant of the patent: **05.07.2017**
(21) Application number: 11824332.8
(22) Date of filing: 21.02.2011
(51) Int. Cl.: H01M 8/02, H01M 8/04, H01M 8/10

(54) **FUEL CELL**
BRENNSTOFFZELLE
PILE À COMBUSTIBLE

(43) Date of publication of application: 01.01.2014
(73) Proprietor: TOYOTA JIDOSHA KABUSHIKI KAISHA, Toyota-shi, Aichi-ken, 471-8571 (JP)
(72) Inventor: ISHIKAWA Yuji, Toyota-shi, Aichi - ken, 471-8571 (JP)
(74) Representative: Kuhnen & Wacker
(86) International application number: PCT/JP2011/053694
(87) International publication number: WO 2012/114432

(56) References cited:
- JP-A- 5 251 097
- JP-A- 2000 223 137
- JP-A- 2001 006 698
- JP-A- 2003 217 615
- JP-A- 2004 079 245
- JP-A- 2006 114 387
- JP-A- 2006 253 038
- JP-A- 2007 035 527
- JP-A- 2007 305 532
- JP-A- 2008 140 640
- JP-A- 2009 026 476
- JP-A- 2011 018 525

## Description

### TECHNICAL FIELD

The present invention relates to a fuel cell, and more particularly to the structure of a gas flow passage.

### BACKGROUND ART

In a polymer electrolyte fuel cell, a cell is formed as a minimum unit by sandwiching a membrane electrode assembly (MEA), which is composed of a fuel electrode and an air electrode sandwiching an electrolyte membrane formed of a polymer electrolyte membrane, with two separators, and a plurality of cells are normally stacked to form a fuel cell stack, which can provide a high voltage.

The mechanism for electric power generation employed by a polymer electrolyte fuel cell is known. Briefly described, fuel gas, such as hydrogen gas, is supplied to the fuel electrode (i.e., anode-side electrode), and oxidant gas, such as air, is supplied to the air electrode (i.e., a cathode-side electrode). The hydrogen gas is supplied to the anode-side electrode through a fuel gas flow passage, and is dissociated into electrons and hydrogen ions by the action of a catalyst of the electrode. The electrons move to the cathode side electrode through an external circuit. Meanwhile, the hydrogen ions pass through the electrolyte membrane and reach the cathode electrode, where the hydrogen ions bond to oxygen and the electrons passing through the external circuit to produce reaction water. The heat generated by the bonding reaction of hydrogen with oxygen and electrons is recovered by means of cooling water. Further, water generated on the cathode electrode side (which will be hereinafter referred to as "generated water") is drained from the cathode side.

The anode electrode and the cathode electrode of a fuel cell described above are formed of catalyst layers, which include a stack of gas diffusion layers for diffusing fuel gas and oxidant gas, respectively.

Here, if the drainage of the generated water generated by the above-described reaction is interrupted on the cathode side, there is a possibility of occurrence of a clogging phenomenon (which is also referred to as a "flooding phenomenon").

In order to address this problem, the gas diffusion layer is generally formed of a layer made of carbon fibers and a water repellent layer and facilitates drainage of the generated water by the water repellent layer. A structure in which a membrane electrode assembly (MEA) and a gas diffusion layer are integrated may be referred to as a membrane electrode gas diffusion layer assembly (MEGA).

Patent Literature 1 discloses a cell of a fuel cell formed of a power generation section and separators, a gas flow passage being formed on a front surface of the separators for supplying reaction gas to a fuel electrode and an oxygen electrode, in which the separator includes a liquid passage formed on a rear surface thereof, and in which heat generated in the power generation section is removed by temperature adjusting water flowing in the liquid passage. Further, by setting the groove width of the fluid passage to be narrower toward the downstream of the gas flow passage and to be wider toward the upstream of the gas flow passage so that a smaller amount of heat of the power generation section is removed toward the gas downstream side and a greater amount of heat of the power generation section is removed toward the gas upstream side, the temperature on the gas downstream side is made to be relatively high to thereby suppress flooding of the power generation section and the temperature on the gas upstream side is made to be relatively low to thereby suppress dry-up (low humidity state) of the power generation section. Patent Literature 2 discloses a polymer electrolyte fuel cell comprising a MEA 12 disposed between metallic separators 14 and 16. Fuel and oxidant gases flow in opposite directions in the gas flow passages defined in each separator by flat parts 38, 46. These flat parts are set up such that their width becomes smaller from the upstream toward the downstream of each of the gas passages 36, 42.

### PRIOR ART DOCUMENT

### PATENT LITERATURE

Patent Literature 1: JP 2008-140640 A
Patent Literature 2: JP 2004-079245 A3

### SUMMARY OF THE INVENTION

### PROBLEMS TO BE SOLVED BY THE INVENTION

Because, when a dry-up phenomenon is induced, proton conductivity of the electrolyte membrane is lowered to thereby reduce the power generation efficiency, it is necessary to suppress the dry-up phenomenon on the gas upstream side. However, because the gas flow passage and the liquid groove are formed on the front and rear surfaces of the separator; i.e., on the opposite sides of the separator, respectively, in a structure in which the groove width of the liquid passage is relatively wider on the upstream side of the gas flow passage, the flow passage for draining the generated water is conversely narrower, which leads to a possibility of reducing the water drainage ability.

Accordingly, there is desired a structure of a fuel cell in which the water drainage ability can be secured to thereby suppress flooding, and simultaneously dry-up on the gas upstream side can be reliably prevented.

### SOLUTION TO PROBLEMS

In accordance with an aspect of the invention, there is provided a fuel cell, including an anode-side gas flow passage, which is in contact with an anode-side gas diffusion layer, for supplying fuel gas to the anode-side gas diffusion layer, and a cathode-side gas flow passage, which is in contact with a cathode-side gas diffusion layer, for supplying oxidant gas to the cathode-side gas diffusion layer, wherein the anode-side gas flow passage and the cathode-side gas flow passage are opposed flow passages in which a direction in which gas flows in one flow passage is opposite a direction in which gas flows in the other flow passage, a contact area or a contact ratio of a metal member forming the anode-side gas flow passage is set to be smaller from upstream toward downstream of the anode-side gas flow passage, a contact area or a contact ratio of a metal member forming the cathode-side gas flow passage is set to be smaller from upstream toward downstream of the cathode-side gas flow passage, on the downstream of the cathode-side gas flow passage, the contact area or the contact ratio of the metal member forming the cathode-side gas flow passage is set to be relatively smaller than the contact area or the contact ratio of the metal member forming the anode-side gas flow passage, and on the upstream of the cathode-side gas flow passage, the contact area or the contact ratio of the metal member forming the anode-side gas flow passage is set to be relatively smaller than the contact area or the contact ratio of the metal member forming the cathode-side gas flow passage, characterized in that the metal member forming the cathode-side gas flow passage is a metal porous body, and the metal member forming the anode-side gas flow passage is a rib.

According to still another embodiment of the present invention, the metal porous body is an expanded metal body.

According to a further embodiment of the present invention, a contact area or a contact ratio of the metal porous body forming the cathode-side gas flow passage is fixed in each of three portions of the cathode-side gas flow passage; that is, an upstream portion, a midstream portion, and a downstream portion, and the contact area or the contact ratio of the metal porous body is set to be smaller in the downstream portion than in the midstream potion and smaller in the midstream portion than in the upstream portion.

According to still another embodiment of the present invention, water which is generated on the cathode side moves from the cathode-side gas flow passage to the anode-side gas flow passage on the downstream of the cathode-side gas flow passage, and also moves from the anode-side gas flow passage to the cathode-side gas flow passage on the downstream of the anode-side gas flow passage, so that the fuel cell is operated in a non-humidified state in which no external humidification is performed.

### ADVANTAGEOUS EFFECTS OF THE INVENTION

According to the present invention, in a fuel cell, the water drainage ability can be secured to suppress flooding, and simultaneously dry-up can be suppressed. As a result, the power generation efficiency of the fuel cell can be increased.

### BRIEF DESCRIPTION OF THE DRAWINGS

[FIG. 1] A cross sectional view illustrating a structure of a fuel cell according to a first embodiment.
[FIG. 2] A graph illustrating a change in a contact area of an anode-side gas flow passage and that of a cathode-side gas flow passage in the first embodiment.
[FIG. 3] A perspective view illustrating an expanded metal body.
[FIG. 4] An explanatory view illustrating circulation of generated water in the first embodiment.
[FIG. 5] An explanatory view illustrating a flow passage in the expanded metal body in the first embodiment.
[FIG. 6] A graph illustrating distribution of water content in the cell in-plane direction.
[FIG. 7] A graph illustrating a relationship between temperature and cell voltage.
[FIG. 8] A graph illustrating a change in a contact area of an anode-side gas flow passage and that of a cathode-side gas flow passage in a second embodiment/
[FIG. 9] A cross sectional view illustrating a structure of a fuel cell according to a third embodiment.
[FIG. 10] An explanatory view illustrating circulation of generated water in the third embodiment.

### BEST MODE FOR CARRYING OUT THE INVENTION

Preferred embodiments of the present invention will be described with reference to the drawings. It should be noted that the following embodiments will be described merely for illustrative purpose, and the present invention is not limited to these embodiments.

### 1. Basic Principle

First, the basic principle of the present embodiments will be described.

In a fuel cell, heat and generated water are generated as a result of generation of electric power. The generated water produced on the cathode side is pushed out by oxidant gas such as air within the cathode side gas flow passage and flows from the upstream side to the downstream side of the gas flow passage. Consequently, a dry-up phenomenon is likely to occur on the gas upstream side and a flooding phenomenon is likely to occur on the gas downstream side.

In order to prevent the dry-up on the gas upstream side, while there can be considered external humidification of the oxidant gas by using a humidifier or the like before supply of the oxidant gas to a cell of a fuel cell, this method additionally requires a humidifier and therefore causes an increase in cost. It is therefore desirable to suppress the dry-up phenomenon without humidification and to simultaneously suppress the flooding phenomenon.

According to the present embodiments, the anode-side gas flow passage and the cathode-side gas flow passage are set as opposed flow passages whose flow directions are opposite each other, such that, via an MEA, the upstream side of the anode-side gas flow passage and the downstream side of the cathode-side flow passage are opposed to each other and the downstream side of the anode-side gas flow passage and the upstream side of the cathode-side flow passage are opposed to each other.

Then, in a region in which the upstream side of the anode-side gas flow passage and the downstream side of the cathode-side gas flow passage are opposed to each other via the MEA, the temperature of the downstream side of the cathode-side gas flow passage is set to be relatively higher than the temperature of the upstream side of the anode-side gas flow passage. Further, in a region in which the downstream side of the anode-side gas flow passage and the upstream side of the cathode-side gas flow passage are opposed to each other via the MEA, the temperature of the downstream side of the anode-side gas flow passage is set to be relatively higher than the temperature of the upstream side of the cathode-side gas flow passage.

In the cathode-side gas flow passage, the generated water is pushed out by the oxidant gas such as air and flows toward the downstream side. Here, because the temperature of the downstream side of the cathode-side gas flow passage is higher than the temperature of the upstream side of the anode-side gas flow passage, the generated water flowing toward the downstream side of the cathode-side gas flow passage flows toward the upstream side of the anode-side gas flow passage, whose temperature is relatively lower, via the MEA. Then, the generated water which has moved to the upstream side of the anode-side gas flow passage is pushed out by the fuel gas such as oxygen gas in the anode-side gas flow passage and flows toward the downstream side of the anode-side gas flow passage.

As the temperature on the downstream side of the anode-side gas flow passage is higher than the temperature on the upstream side of the cathode-side gas flow passage, the generated water which has flowed to the downstream side of the anode-side gas flow passage moves, via the MEA, to the upstream side of the cathode-side gas flow passage where the temperature is relatively lower.

Consequently, the generated water produced on the cathode side flows sequentially through the upstream side of the cathode-side gas flow passage, the downstream side of the cathode-side gas flow passage, the upstream side of the anode-side gas flow passage, the downstream side of the anode-side gas flow passage, and back to the upstream side of the cathode-side gas flow passage, thereby circulating within the cathode-side gas flow passage and the anode-side gas flow passage. Accordingly, the flooding phenomenon on the downstream side of the cathode-side gas flow passage can be suppressed and also the dry-up phenomenon on the upstream side of the cathode-side gas flow passage can be suppressed simultaneously.

In order to make the temperature on the downstream side of the cathode-side gas flow passage relatively higher than the temperature on the upstream side of the anode-side gas flow passage in the region where the upstream side of the anode-side gas flow passage and the downstream side of the cathode-side gas flow passage are opposed to each other, it is sufficient to make the cooling performance (or the heat releasing property) of the upstream side of the anode-side gas flow passage relatively greater than that of the downstream side of the cathode-side gas flow passage. More specifically, because cooling is caused by heat conduction resulting from contact between a metal member forming the gas flow passage and the MEA, it is sufficient to make the contact area over which the metal member and the MEA are in contact with each other (more particularly, the contact area over which the metal member and the gas diffusion layer are in contact with each other) relatively larger on the upstream side of the anode-side gas flow passage than on the downstream side of the cathode-side gas flow passage.

With this structure, because a greater amount of heat is removed by the metal member on the upstream side of the anode-side gas flow passage, the temperature is relatively lower on the upstream side of the anode-side gas flow passage than on the downstream side of the cathode-side gas flow passage.

Further, in order to make the temperature on the downstream side of the anode-side gas flow passage relatively higher than the temperature on the upstream side of the cathode-side gas flow passage in the region where the downstream side of the anode-side gas flow passage and the upstream side of the cathode-side gas flow passage are opposed to each other, it is sufficient to make the cooling performance (or the heat releasing property) of the upstream side of the cathode-side gas flow passage relatively greater than that on the downstream side of the anode-side gas flow passage. More specifically, it is sufficient to make the contact area between the metal member and the MEA relatively larger on the upstream side of the cathode-side gas flow passage than on the downstream side of the anode-side gas flow passage.

With this structure, because a greater amount of heat is removed by the metal member on the upstream side of the cathode side gas flow passage, the temperature is relatively lower on the upstream side of the cathode side gas flow passage than on the downstream side of the anode side gas flow passage.

With respect to the cathode-side gas flow passage, as the cooling performance is made greater on the upstream side of the cathode-side gas flow passage and is made smaller on the downstream side of the cathode-side gas flow passage, the cooling performance is decreased from the upstream toward the downstream in the cathode-side gas flow passage. In other words, in the cathode-side gas flow passage, the contact area of the metal member forming the cathode-side gas flow passage contacting the cathode-side gas diffusion layer is decreased from the upstream toward the downstream.

Further, with respect to the anode-side gas flow passage, as the cooling performance is made greater on the upstream side of the anode-side gas flow passage and is made smaller on the downstream side of the anode-side gas flow passage, the cooling performance is decreased from the upstream toward the downstream in the anode-side gas flow passage. In other words, in the anode-side gas flow passage, the contact area of the metal member forming the anode-side gas flow passage contacting the anode-side gas diffusion layer is decreased from the upstream toward the downstream.

Based on the principle described above, the generated water is allowed to circulate within the reaction gas flow passage, so that flooding and dry-up can be suppressed simultaneously. Also, according to the present embodiments, as the dry-up phenomenon is suppressed by circulation of the generated water, humidification of the reaction gas is not required, so that a cost reduction can be achieved.

The present embodiments will be described more specifically below.

### 2. First Embodiment

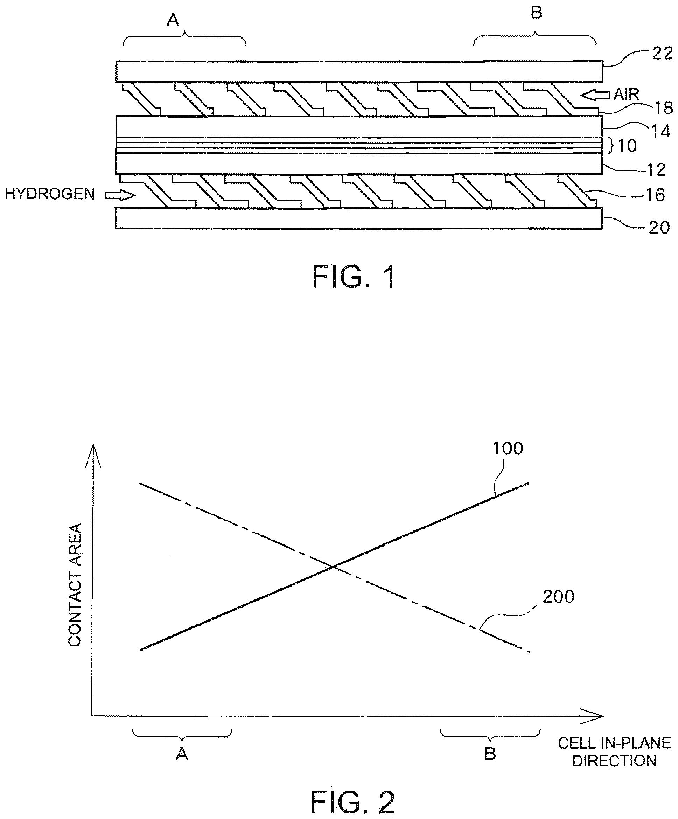

FIG. 1 illustrates a cross sectional view of a structure of a cell of a fuel cell. A cell is formed by including a membrane-electrode assembly (MEA) 10 which is formed of an electrolyte membrane made of a polymer membrane and two electrodes; that is, a fuel electrode and an air electrode, that sandwich the electrolyte membrane, an anode-side gas diffusion layer 12, a cathode-side gas diffusion layer 14, an anode-side gas flow passage 16 formed in contact with the anode-side gas diffusion layer 12, a cathode-side gas flow passage 18 formed in contact with the cathode-side gas diffusion layer 14, and separators 20 and 22.

The anode-side gas flow passage 16 and the cathode-side gas flow passage 18 are both formed of an expanded metal body serving as a metal member. Hydrogen gas is supplied to the anode-side gas flow passage 16 as fuel gas, and air is supplied to the cathode-side gas flow passage 18 as oxidant gas.

The anode-side gas flow passage 16 and the cathode-side gas flow passage 18 are opposite to each other. More specifically, the flow path for hydrogen gas in the anode-side gas flow passage 16 and the flow path for air in the cathode-side gas flow passage 18 are directed toward opposite directions. For example, as illustrated in the figure, the hydrogen gas flows from left to right in the anode-side gas flow passage 16 in the figure, whereas the air flows from right to left in the cathode-side gas flow passage 18 in the figure. As the two flow passages are directed oppositely, the upstream of the anode-side gas flow passage 16 is opposed to the downstream of the cathode-side gas flow passage 18 via the MEA 10, and the downstream of the anode-side gas flow passage 16 is opposed to the upstream of the cathode-side gas flow passage 18 via the MEA 10. As can be understood from the figure, the region A corresponds to the upstream of the anode-side gas flow passage 16 and simultaneously corresponds to the downstream of the cathode-side gas flow passage 18, and the region B corresponds to the downstream of the anode-side gas flow passage 16 and simultaneously corresponds to the upstream of the cathode-side gas flow passage 18.

As described above, the hydrogen gas is supplied to the anode-side electrode through the anode-side gas flow passage 16, and is dissociated into electrons and hydrogen ions by catalysis of the electrode. The electrons move to the cathode-side electrode through the external circuit. Meanwhile, the hydrogen ions reach the cathode-side electrode through the MEA 10 and are bonded to oxygen contained in the air and the electrons passing through the external circuit to produce reaction water. The generated water is pushed out by the air flow passage, thereby flowing from the upstream side toward the downstream side of the air flow passage. Consequently, a dry-up phenomenon is likely to occur on the upstream side of the cathode-side flow passage 18, and a flooding phenomenon is likely to occur on the downstream side of the cathode side gas flow passage 18.

In order to address this problem, according to the present embodiment, attention is drawn to the contact area of the expanded metal body forming the cathode-side gas flow passage 18, which is in contact with the cathode-side gas diffusion layer 14. Specifically, the contact area of the cathode-side gas flow passage 18 on the downstream side is made relatively smaller than the contact area on the upstream side.

Similarly, attention is also drawn to the contact area of the expanded metal body forming the anode-side gas flow passage 16, which is in contact with the anode-side gas diffusion layer 12. Specifically, the contact area of the anode-side gas flow passage 16 on the downstream side is made relatively smaller than the contact area on the upstream side.

FIG. 2 illustrates a change, in a cell in-plane direction, of the contact area of the expanded metal body forming the cathode-side gas flow passage 18 contacting the cathode-side gas diffusion layer 14 and a change, in a cell in-plane direction, of the contact area of the expanded metal body forming the anode-side gas flow passage 16 contacting the anode-side gas diffusion layer 12 in the present embodiment. In the figure, the change of the contact area of the expanded metal body forming the cathode-side gas flow passage 18 is indicated by a solid line 100, and the change of the contact area of the expanded metal body forming the anode-side gas flow passage 16 is indicated by a dash-dot line 200.

The contact area of the expended metal body forming the cathode-side gas flow passage 18 is varied such that the contact area is continuously decreased from the upstream to the downstream of the cathode-side gas flow passage 18 with respect to the cell in-plane direction. In the figure, the contact area of the expanded metal body forming the cathode-side gas flow passage 18 is linearly decreased from the right hand side (upstream) toward the left hand side (downstream) in the figure.

Further, the contact area of the expended metal body forming the anode-side gas flow passage 16 is varied such that the contact area is continuously decreased from the upstream to the downstream of the anode-side gas flow passage 16. In the figure, the contact area of the expanded metal body forming the anode-side gas flow passage 16 is linearly decreased from the left hand side (upstream) toward the right hand side (downstream) in the figure.

As described above, as the contact area of the expended metal body forming the cathode-side gas flow passage 18 is relatively smaller on the downstream side of the cathode-side gas flow passage 18, and, on the other hand, the contact area of the expended metal body forming the anode-side gas flow passage 16 is relatively larger on the upstream side of the cathode-side gas flow passage 16, the contact area of the expanded metal body forming the cathode-side gas flow passage 18 is relatively smaller than the contact area of the expanded metal body forming the anode-side gas flow passage 16.

Similarly, as the contact area of the expended metal body forming the cathode-side gas flow passage 18 is relatively larger on the upstream side of the anode-side gas flow passage 18, and, on the other hand, the contact area of the expanded metal body forming the anode-side gas flow passage 16 is relatively smaller on the downstream side of the anode-side gas flow passage 16, the contact area of the expanded metal body forming the anode-side gas flow passage 16 is relatively smaller than the contact area of the expanded metal body forming the cathode-side gas flow passage 18.

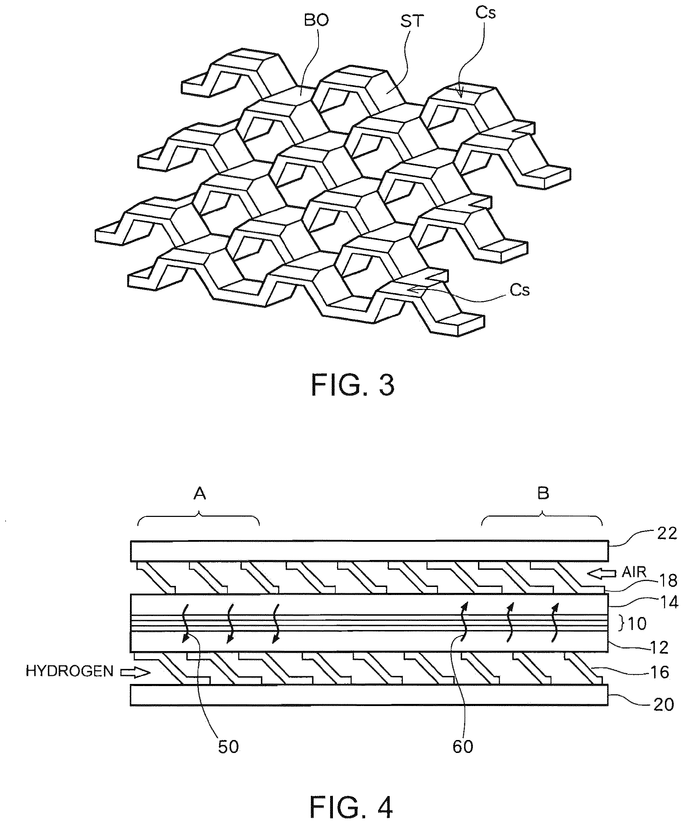

FIG. 3 illustrates a perspective view of the expanded metal body forming the cathode-side gas flow passage 18 and the anode-side gas flow passage 16. The expanded-metal body is generally used as a material for forming a gas flow passage of a cell of a fuel cell, and is formed by sequentially forming slits in a staggered pattern on a plate-like thin metal by machining and also stretching up the slits to form mesh-like perforations having a small diameter, and further rolling the metal body into a substantially planar sheet.

The method of manufacturing the expanded metal body is known. Briefly described, a plate material is fed into a die which is provided with a lower knife and an upper knife at a predetermined pitch for partially shearing the plate material at fixed intervals by a trapezoidal projection portion of the upper knife and a trapezoidal recess portion of the lower knife. Then, by shifting the upper knife and the lower knife in a predetermined feeding direction each time the upper knife is lifted, trapezoidal steps are formed one at a time in a staggered pattern, thereby forming a lath-cut metal body having a stepped mesh. By further rolling the lath-cut metal body having a stepped mesh by a reduction roll, a substantially planar expanded metal body is manufactured.

The expanded metal body includes bond portions BO and strand portions ST interconnecting the bond portions BO, and also includes contact surfaces Cs which come into contact with the gas diffusion layer 12 (or 14). In the present embodiment, the contact surfaces Cs are not identical in the expanded metal body and vary relatively between the upstream and the downstream of the gas flow passage.

Referring back to FIG. 2, with the change of the contact area of the expanded metal body as described above, a relative difference is accordingly generated in the cooling performance of the gas flow passage. More specifically, as the expanded metal body forming the cathode-side gas flow passage 18 and the anode-side gas flow passage 16 has a function of removing heat generated by the electric power generation, the contact area of the expanded metal body directly affects the cooling function of the passages. Specifically, if the contact area of the expanded metal body is relatively large, the cooling performance is relatively high. Because, on the downstream side of the cathode-side gas flow passage (the region A in FIGs. 1 and 2), the contact area of the expanded metal body forming the cathode-side gas flow passage 18 is relatively smaller than the contact area of the expanded metal body forming the anode-side gas flow passage 16, the cooling performance is relatively lower in the downstream of the cathode-side gas flow passage 18 than in the upstream of the anode-side gas flow passage 16. Accordingly, in the downstream of the cathode-side gas flow passage 18, the temperature is relatively higher in the downstream of the cathode-side gas flow passage 18 than in the upstream of the anode-side gas flow passage 16.

On the other hand, on the upstream side of the cathode-side gas flow passage (the region B in FIGs. 1 and 2), the contact area of the expanded metal body forming the cathode-side gas flow passage 18 is relatively larger than the contact area of the expanded metal body forming the anode-side gas flow passage 16, and the cooling performance is relatively higher in the upstream of the cathode-side gas flow passage 18. Accordingly, in this region, the temperature is relatively higher in the downstream of the anode-side gas flow passage 16 than in the upstream of the cathode-side gas flow passage 18. The relative difference in the temperatures thus generated causes circulation of the generated water.

FIG. 4 schematically illustrates flow of the generated water according to the present embodiment. The generated water produced on the cathode side due to the electric power generation reaction is pushed out by the air flowing in the cathode-side gas flow passage 18 and flows towards the downstream side of the cathode-side gas flow passage (the region A in the figure). As the temperature on the downstream side of the cathode-side gas flow passage 18 is relatively higher than the upstream side of the anode-side gas flow passage 16, this temperature gradient causes the generated water to flow from the cathode-side to the anode-side via the MEA 10. In the figure, the arrows 50 indicate the movement of the generated water from the cathode-side to the anode-side. The generated water which has moved to the anode-side is then pushed out by the hydrogen gas flowing in the anode-side gas flow passage 16 and flows toward the downstream side of the anode-side gas flow passage; i.e., the upstream side of the cathode-side gas flow passage (the region B in the figure). As the temperature on the upstream side of the cathode-side gas flow passage 18 is relatively lower than that on the downstream side of the anode-side gas flow passage 16, this temperature gradient causes the generated water to move from the anode side to the cathode side via the MEA 10. In the figure, the arrows 60 indicate the movement of the generated water from the anode-side to the cathode-side.

In the manner described above, the generated water moves from the upstream side of the cathode-side gas flow passage 18, sequentially to the downstream side of the cathode-side gas flow passage 18, the upstream side of the anode-side gas flow passage 16, the downstream side of the anode-side gas flow passage 16, and the upstream side of the cathode-side gas flow passage 18. As the generated water is thus supplied to the cathode-side gas flow passage 18 in a circulating manner, flooding on the downstream side of the cathode-side gas flow passage 18 is suppressed and dry-up on the upstream side of the cathode-side gas flow passage 18 is suppressed. It should be noted that not all of the generated water is circulated and a portion of the generated water is externally drained from the cathode side.

In the present embodiment, the contact area of the expanded metal body is varied to thereby cause a relative temperature gradient between the cathode side and the anode side, thereby causing movement of the generated water. In this case, because the expanded metal body is configured such that the gas flow passage and the flow passage for drainage are separated from each other and the water flows in the interface between the expanded metal body and the separators 20 and 22, even if the contact area of the expanded metal body contacting the gas diffusion layers 12 and 14 is increased as in the present embodiment, the gas flow passage and the flow passage for drainage can be secured and therefore there can be prevented a reduction in the power generation performance caused by narrowing of the gas flow passage and the drain flow passage.

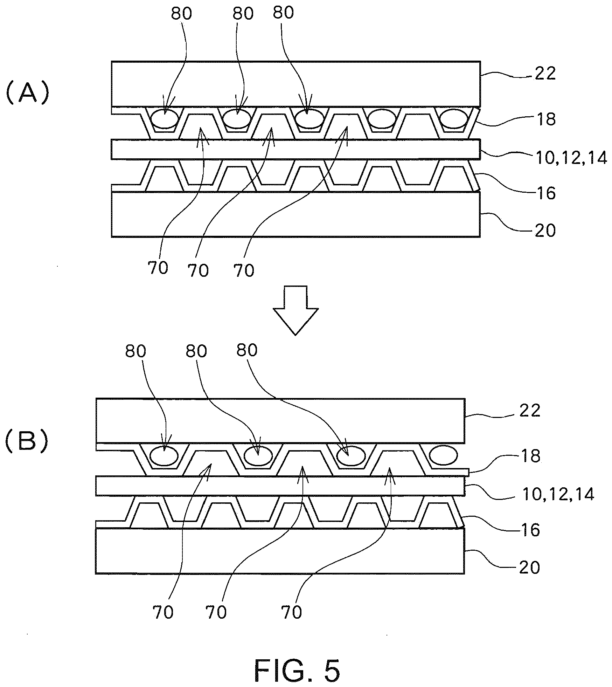

FIG. 5 schematically illustrates a change in the gas flow passage and the drain flow passage in association with the change of the contact area of the expanded metal body. Specifically, FIG. 5(A) illustrates a case in which the contact area of the expanded metal body forming the cathode-side gas flow passage 18 and the anode-side gas flow passage 16 has a certain value, and FIG. 5(B) illustrates a case in which the contact area of the expanded metal body forming the cathode-side gas flow passage 18 is increased. The expanded metal body allows a gas flow passage 70 and a drain flow passage 80 to be formed separately, and water is accumulated in a hydrophilic/hydrophilic interface between the expanded metal body and the separators 20 and 22 to form the drain flow passage 80. As such, it can be understood that, even if the contact area of the expanded metal body is increased to enhance the cooling performance, both the gas flow passage 70 and the drain flow passage 80 are not narrowed and can be maintained.

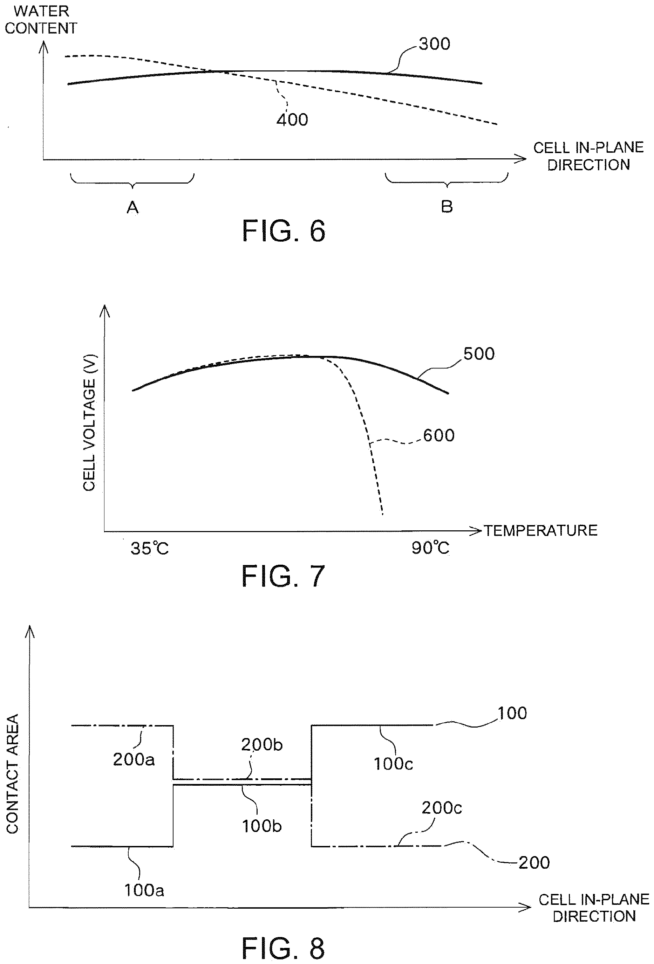

FIG. 6 illustrates a distribution of water content in the cell in-plane direction in the present application. In FIG. 6, the solid line 300 indicates the distribution of the water content in the present embodiment. The dotted line 400 indicates, for comparison, the distribution of the water content obtained in a case in which the contact area of the expanded metal body forming the cathode-side gas flow passage 18 and the anode-side gas flow passage 16 is fixed. When the contact area is fixed, the water content is significantly decreased and the dry-up phenomenon is generated in the upstream side of the cathode-side gas flow passage 18 (region B in the figure). Further, the water content is relatively higher on the downstream side of the cathode-side gas flow passage than on the upstream side thereof.

According to the present embodiment, on the other hand, on the downstream side of the cathode-side gas flow passage 18, as the water moves from the cathode side to the anode side, the water content is relatively reduced compared to the comparative example. Also, on the upstream side of the cathode-side gas flow passage 18, as the water moves from the anode side to the cathode side, the water content is relatively increased compared to the comparative example. Consequently, according to the present embodiment, a variation in the water content is reduced between the upstream side and the downstream side of the cathode-side gas flow passage 18. It can be understood also from FIG. 6 that, in the present embodiment, both the flooding phenomenon on the downstream side of the cathode-side gas flow passage 18 and the dry-up phenomenon on the upstream side can be suppressed.

FIG. 7 illustrates a relationship between cell temperature and cell voltage (output voltage). In FIG. 7, the solid line 500 indicates a change in the cell voltage in the present embodiment, and the dotted line 600 indicates a change in the cell voltage obtained in a case in which the contact area of the expanded metal body forming the cathode-side gas flow passage 18 and the anode-side gas flow passage 16 is fixed. When the contact area is fixed, with the increase of the temperature up to approximately 90 degrees, the proton conductivity of the electrolyte membrane is reduced due to the effects of the dry-up to thereby reduce the power generation efficiency, also leading to a reduction in cell voltage.

According to the present embodiment, on the other hand, as the dry-up is suppressed, the reduction in the power generation efficiency can be suppressed even if the cell temperature is increased, so that the cell voltage can remain substantially fixed.

### 3. Second Embodiment

While in the first embodiment, the contact area of the expanded metal body forming the cathode-side gas flow passage 18 and the anode-side gas flow passage 16 is varied linearly as illustrated in FIG. 2, the contact area of the expanded metal body may be varied non-linearly or in steps (stepwise).

FIG. 8 illustrates a change in the contact area of the expanded metal body in the cell in-plane direction according to the second embodiment. The solid line 100 indicates a change in the contact area of the expanded metal body forming the cathode-side gas flow passage 18, in which the contact area increases stepwise from the downstream side of the cathode-side gas flow passage 18 toward the upstream side thereof. More specifically, when the cathode-side gas flow passage 18 is divided into a downstream region, a midstream region, and an upstream region, the contact area is set to a fixed value in each of these divided regions, while the contact areas of these regions are set so as to satisfy the relationship: the contact area of the downstream region 100a < the contact area of the midstream region 100b < the contact area of the upstream region 100c.

Further, the dash-dot line 200 indicates a change in the contact area of the expanded metal body forming the anode-side gas flow passage 16, in which the contact area decreases stepwise from the downstream side of the cathode-side gas flow passage 18 toward the upstream side thereof (i.e. from the upstream side of the anode-side gas flow passage 16 toward the downstream side thereof). More specifically, when the anode-side gas flow passage is divided into a downstream region, a midstream region, and an upstream region, the contact area is set to a fixed value in each of these divided regions while the contact areas of these regions are set so as to satisfy the relationship: the contact area of the downstream region 200a > the contact area of the midstream region 200b > the contact area of the upstream region 200c.

In this example, as in the first example, in the downstream of the cathode-side gas flow passage 18, the contact area of the expanded metal body is relatively larger in the anode-side gas flow passage 16 than in the cathode-side gas flow passage 18, and, due to this relative relationship of the contact areas, the temperature of the cathode-side gas flow passage is higher than the temperature of the anode-side gas flow passage 16. Accordingly, the generated water pushed out toward the downstream side of the cathode-side gas flow passage 18 flows toward the anode side via the MEA 10 in accordance with this temperature gradient.

Further, in the upstream of the cathode-side gas flow passage 18, the contact area of the expanded metal body is relatively larger in the cathode-side gas flow passage 18 than in the anode-side gas flow passage 16, and, due to this relative relationship of the contact areas, the temperature of the anode-side gas flow passage 16 is higher than the temperature of the cathode-side gas flow passage 18. Accordingly, the generated water pushed out toward the downstream side of the anode-side gas flow passage 16 flows toward the cathode side via the MEA 10 in accordance with this temperature gradient.

As described above, the generated water is circulated to the upstream of the cathode-side gas flow passage 18, so that flooding in the downstream of the cathode-side gas flow passage 18 can be suppressed and also dry-up in the upstream of the cathode-side gas flow passage 16 can be suppressed.

### 4. Third Embodiment

While in the first embodiment described above, each of the cathode-side gas flow passage 18 and the anode-side gas flow passage is formed of an expanded metal body, in consideration that the issues of drainage are related to the cathode side, it is possible to form the cathode-side gas flow passage 18 of the expanded metal body while forming the anode-side members of other than the expanded metal body; e.g. recesses and projections or grooves that are formed on the surface of the separator 20.

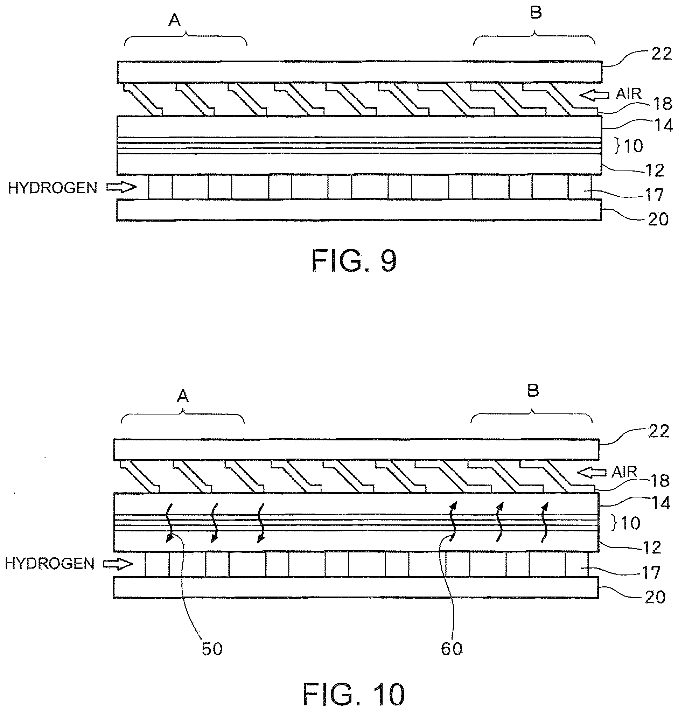

FIG. 9 illustrates a structure of a cross section of a cell of a fuel cell according to the third embodiment. The cell of a fuel cell is formed by including a membrane electrode assembly (MEA) 10 formed by sandwiching an electrolyte membrane made of a polymer membrane with two electrodes; that is, a fuel electrode and an air electrode, an anode-side gas diffusion layer 12, a cathode-side gas diffusion layer 14, an anode-side gas flow passage 17, a cathode-side gas flow passage 18, and separators 20 and 22.

The cathode-side gas flow passage 18 is formed of an expanded metal body. Further, the anode-side gas flow passage 17 is formed of recesses and projections or grooves formed on the surface of the separator 20. The projecting portion of the groove is in contact with the anode-side gas diffusion layer 12 and functions as a rib for the MEA 10 or the anode-side gas diffusion layer 12. Therefore, a member which forms the anode-side gas flow passage 17 will be hereinafter referred to as a rib as appropriate.

Air is supplied as oxidant gas to the cathode-side gas flow passage 18. Hydrogen gas is supplied as fuel gas to the anode-side gas flow passage 17. The cathode-side gas flow passage 18 (air flow passage) and the anode-side gas flow passage 17 (hydrogen gas flow passage) are opposed to each other. More specifically, the direction of the air flow passage and the direction of the hydrogen gas flow passage are opposite each other, and the upstream of the air flow passage corresponds to the downstream of the hydrogen gas flow passage and the downstream of the air flow passage corresponds to the upstream of the hydrogen gas flow passage.

The contact area of the expanded metal body forming the cathode-side gas flow passage 18 which contacts the cathode-side gas diffusion layer 14 is larger on the upstream side than on the downstream side. On the other hand, the contact area of the rib forming the anode-side gas flow passage 17 is also relatively larger on the upstream side than on the downstream side. As the upstream of the anode-side gas flow passage 17 corresponds to the downstream of the cathode-side gas flow passage 18 and the downstream of the anode-side gas flow passage 17 corresponds to the upstream of the cathode-side gas flow passage 18, the contact area of the rib is relatively larger on the downstream side than on the upstream side with reference to the flow of the cathode-side gas flow passage 18.

Because the ribs forming the anode-side gas flow passage 17 function as a cooling surface, the greater the contact area thereof, the greater the cooling performance thereof. Accordingly, on the downstream side of the cathode-side gas flow passage 18 indicated as a region A in the figure, the contact area of the ribs of the anode-side gas flow passage 17 is relatively larger than the contact area of the expanded metal body of the cathode-side gas flow passage 18, and consequently the temperature of the cathode-side gas flow passage 18 is relatively higher than the temperature of the anode-side gas flow passage 17. Further, on the upstream side of the cathode-side gas flow passage 18 indicated as a region B in the figure, the contact area of the expanded metal body of the cathode-side gas flow passage 18 is relatively larger than the contact area of the ribs of the anode-side gas flow passage 17, and consequently the temperature of the anode-side gas flow passage 17 is relatively higher than the temperature of the cathode-side gas flow passage 18.

As described above, because the temperature gradient is caused between the cathode-side gas flow passage 18 and the anode-side gas flow passage 17, on the downstream side of the cathode-side gas flow passage 18 indicated as the region A in the figure, the generated water is moved from the downstream side of the cathode-side gas flow passage 18 toward the upstream side of the anode-side gas flow passage 17 via the MEA 10 (see arrows 50). Further, on the upstream side of the cathode-side gas flow passage 18 indicated as the region B in the figure, the generated water is moved from the downstream side of the anode-side gas flow passage 17 toward the upstream side of the cathode-side gas flow passage 18 via the MEA 10 (see arrows 60).

In the manner described above, according to the present embodiment, as in the previous embodiments, the generated water moves from the upstream side of the cathode-side gas flow passage 18, sequentially to the downstream side of the cathode-side gas flow passage 18, the upstream side of the anode-side gas flow passage 17, the downstream side of the anode-side gas flow passage 17, and the upstream side of the cathode-side gas flow passage 18. As the generated water is thus supplied to the cathode-side gas flow passage 18 in a circulating manner, flooding on the downstream side of the cathode-side gas flow passage 18 is suppressed and dry-up on the upstream side of the cathode-side gas flow passage 18 is also suppressed.

Here, while the increase in the contact area of the ribs forming the anode-side gas flow passage 17 accordingly causes an increase in the rib width, thereby leading to a possibility of lowering the drainage ability, such an issue regarding the drainage ability can be disregarded in the anode-side gas flow passage 17.

Further, while in the present embodiments, the contact area of the expanded metal body or the contact area of the ribs is varied, the contact ratio, rather than the contact area, may be varied. Here, the contact ratio refers to a ratio of the area of the expanded metal body or the recesses and projections forming the gas flow passage which is in contact with the gas diffusion layer with respect to the surface area of the interface between the expanded metal body or the recesses and projections forming the gas flow passage and the gas diffusion layer. According to the present embodiments, the difference in the contact ratio between the cathode-side gas flow passage 18 and the anode-side gas flow passage 16 (or 17) is used to thereby form a temperature gradient, so that the generated water can be moved. The contact ratios of the cathode-side gas flow passage 18 and the anode-side gas flow passage 16 (or 17) in the region A of Fig. 1, for example, are as follows:
Cathode-side gas flow passage 18: 8 to 10%
Anode-side gas flow passage 16: 15 to 20%
While the difference in the contact areas is preferably 7% or more, the difference is not limited to this range. The applicant of the present application has confirmed that with the difference in the contact ratios of at least 1% being present between the cathode-side gas flow passage 18 and the anode-side gas flow passage 16 (or 17), the generated water can be moved to the opposite flow passage via the MEA 10.

Also, while in the present embodiments, an expanded metal body has been described as a member for forming the cathode-side gas flow passage 18, such a member is not limited to this example, and there can be used an expanded metal body and other metal members, more particularly a metal porous body.

Moreover, in the present embodiments, a high-temperature non-humidified operation can be performed because the generated water is supplied to the upstream of the cathode-side gas flow passage by circulating the water in the opposed flow passages. As a matter of course, however, a humidified operation can be performed as necessary and is not excluded. However, the non-humidified operation is particularly preferable for mass production because humidifying equipment is not required and therefore costs can be reduced.

In addition, while the fuel cell of the present embodiments can be mounted in a vehicle such as an electric vehicle or a fuel cell vehicle, the fuel cell of the present invention is not limited for use with a vehicle.

### REFERENCE NUMERALS LIST

10 MEA, 12 anode-side gas diffusion layer, 14 cathode-side gas diffusion layer, 16, 17 anode-side gas flow passage, 18 cathode-side gas flow passage, 20, 22 separator

## Claims

1. A fuel cell, comprising:
an anode-side gas flow passage (16), which is in contact with an anode-side gas diffusion layer (12), for supplying fuel gas to the anode-side gas diffusion layer (12); and
a cathode-side gas flow passage (18), which is in contact with a cathode-side gas diffusion layer (14), for supplying oxidant gas to the cathode-side gas diffusion layer (14), wherein
the anode-side gas flow passage (16) and the cathode-side gas flow passage (18) are opposed flow passages in which a direction in which gas flows in one flow passage is opposite to a direction in which gas flows in the other flow passage,
a contact area or a contact ratio of a metal member forming the anode-side gas flow passage (16) is set to be smaller from upstream toward downstream of the anode-side gas flow passage (16),
a contact area or a contact ratio of a metal member forming the cathode-side gas flow passage (18) is set to be smaller from upstream toward downstream of the cathode-side gas flow passage (18),
on the downstream of the cathode-side gas flow passage (18), the contact area or the contact ratio of the metal member forming the cathode-side gas flow passage (18) is set to be relatively smaller than the contact area or the contact ratio of the metal member forming the anode-side gas flow passage (16),
on the upstream of the cathode-side gas flow passage (18), the contact area or the contact ratio of the metal member forming the anode-side gas flow passage (16) is set to be relatively smaller than the contact area or the contact ratio of the metal member forming the cathode-side gas flow passage (18),
the metal member forming the cathode-side gas flow passage (18) is a metal porous body, and
the metal member forming the anode-side gas flow passage (16) is a rib.

2. The fuel cell according to Claim 1, wherein
the metal porous body is an expanded metal body.

3. The fuel cell according to Claim 1, wherein
a contact area or a contact ratio of the metal porous body forming the cathode-side gas flow passage (18) is fixed in each of three portions of the cathode-side gas flow passage (18), an upstream portion (100a), a midstream portion (100b), and a downstream portion (100c), and the contact area or the contact ratio of the metal porous body is set to be smaller in the downstream portion (100c) than in the midstream potion (100b) and smaller in the midstream portion (100b) than in the upstream portion (100a).

4. The fuel cell according to any one of Claims 1 to 3, wherein
water which is generated on the cathode side moves from the cathode-side gas flow passage (18), through a membrane-electrode assembly (10), to the anode-side gas flow passage (16) on the downstream of the cathode-side gas flow passage (18), and also moves from the anode-side gas flow passage (16), through the membrane-electrode assembly (10), to the cathode-side gas flow passage (18) on the downstream of the anode-side gas flow passage (16), so that the fuel cell is operated in a non-humidified state in which no external humidification is performed.

## Patentansprüche

1. Brennstoffzelle, aufweisend:
eine Anodenseitengasströmungsleitung (16), die eine Anodenseitengasdiffusionsschicht (12) berührt, um der Anodenseitengasdiffusionsschicht (12) Brenngas zuzuführen; und
eine Kathodenseitengasströmungsleitung (18), die eine Kathodenseitengasdiffusionsschicht (14) berührt, um der Kathodenseitengasdiffusionsschicht (14) Oxidationsgas zuzuführen, wobei die Anodenseitengasströmungsleitung (16) und die Kathodenseitengasströmungsleitung (18) gegenüberliegende Leitungen sind, in denen eine Richtung, in der ein Gas in einer Strömungsleitung strömt, einer Richtung entgegengesetzt ist, in der ein Gas in der anderen Strömungsleitung strömt,
eine Kontaktfläche oder ein Kontaktverhältnis eines Metallelements, das die Anodenseitengasströmungsleitung (16) bildet, so ausgebildet ist, dass sie/es von einer Stromaufwärtsseite in Richtung zu einer Stromabwärtsseite der Anodenseitengasströmungsleitung (16) kleiner wird,
eine Kontaktfläche oder ein Kontaktverhältnis eines Metallelements, das die Kathodenseitengasströmungsleitung (18) bildet, so ausgebildet ist, dass sie/es von einer Stromaufwärtsseite in Richtung zu einer Stromabwärtsseite der Kathodenseitengasströmungsleitung (18) kleiner wird,
wobei stromabwärts von der Kathodenseitengasströmungsleitung (18) die Kontaktfläche oder das Kontaktverhältnis des Metallelements, das die Kathodenseitengasströmungsleitung (18) bildet, so ausgebildet ist, dass sie/es im Verhältnis kleiner ist als die Kontaktfläche oder das Kontaktverhältnis des Metallelements, das die Anodenseitengasströmungsleitung (16) bildet,
wobei stromaufwärts von der Kathodenseitengasströmungsleitung (18) die Kontaktfläche oder das Kontaktverhältnis des Metallelements, das die Anodenseitengasströmungsleitung (16) bildet, so ausgebildet ist, dass sie/es im Verhältnis kleiner ist als die Kontaktfläche oder das Kontaktverhältnis des Metallelements, das die Kathodenseitengasströmungsleitung (18) bildet,
wobei das Metallelement, das die Kathodenseitengasströmungsleitung (18) bildet, ein poröser Metallkörper ist, und
das Metallelement, das die Anodenseitengasströmungsleitung (16) bildet, eine Rippe ist.

2. Brennstoffzelle nach Anspruch 1, wobei der poröse Metallkörper ein expandierter Metallkörper ist.

3. Brennstoffzelle nach Anspruch 1, wobei
eine Kontaktfläche oder ein Kontaktverhältnis des porösen Metallkörpers, der die Kathodenseitengasströmungsleitung (18) bildet, in jedem der drei Abschnitte der Kathodenseitengasströmungsleitung (18), einem Stromaufwärtsabschnitt (100a), einem Mittelabschnitt (100b), und einem Stromabwärtsabschnitt (100c), befestigt ist, und wobei die Kontaktfläche oder das Kontaktverhältnis des porösen Metallkörpers so eingestellt wird, dass sie/es in dem Stromabwärtsabschnitt (100c) kleiner als in dem Mittelabschnitt (100b) ist und in dem Mittelabschnitt (100b) kleiner als in dem Stromaufwärtsabschnitt (100a) ist.

4. Brennstoffzelle nach einem der Ansprüche 1 bis 3, wobei
Wasser, das an der Kathodenseite erzeugt wird, von der Kathodenseitengasströmungsleitung (18) durch eine Membran-ElektrodenAnordnung (10) zu der Anodenseitengasströmungsleitung (16) stromabwärts von der Kathodenseitengasströmungsleitung (18) strömt, und außerdem von der Anodenseitengasströmungsleitung (16) durch die Membran-ElektrodenAnordnung (10) zu der Kathodenseitengasströmungsleitung (18) stromabwärts von der Anodenseitengasströmungsleitung (16) strömt, so dass die Brennstoffzelle in einem nicht befeuchteten Zustand betrieben wird, in dem keine äußere Befeuchtung durchgeführt wird.

## Revendications

1. Pile à combustible, comprenant :
un passage d'écoulement de gaz côté anode (16), lequel est en contact avec une couche de diffusion de gaz côté anode (12), pour introduire du gaz combustible dans la couche de diffusion de gaz côté anode (12) ; et
un passage d'écoulement de gaz côté cathode (18), lequel est en contact avec une couche de diffusion de gaz côté cathode (14), pour introduire du gaz oxydant dans la couche de diffusion de gaz côté cathode (14), dans laquelle
le passage d'écoulement de gaz côté anode (16) et le passage d'écoulement de gaz côté cathode (18) sont des passages d'écoulement opposés dans lesquels une direction dans laquelle du gaz s'écoule dans un passage d'écoulement est opposée à une direction dans laquelle un gaz s'écoule dans l'autre passage d'écoulement,
une surface de contact ou un taux de contact d'un élément de métal formant le passage d'écoulement de gaz côté anode (16) est fixé pour être plus faible de l'amont vers l'aval du passage d'écoulement de gaz côté anode (16),
une surface de contact ou un taux de contact d'un élément de métal formant le passage d'écoulement de gaz côté cathode (18) est fixé pour être plus faible de l'amont vers l'aval du passage d'écoulement de gaz côté cathode (18),
sur l'aval du passage d'écoulement de gaz côté cathode (18), la surface de contact ou le taux de contact de l'élément de métal formant le passage d'écoulement de gaz côté cathode (18) est fixé pour être relativement plus faible que la surface de contact ou le taux de contact de l'élément de métal formant le passage d'écoulement de gaz côté anode (16),
sur l'amont du passage d'écoulement de gaz côté cathode (18), la surface de contact ou le taux de contact de l'élément de métal formant le passage d'écoulement de gaz côté anode (16) est fixé pour être relativement plus faible que la surface de contact ou le taux de contact de l'élément de métal formant le passage d'écoulement de gaz côté cathode (18),
l'élément de métal formant le passage d'écoulement de gaz côté cathode (18) est un corps poreux de métal, et
l'élément de métal formant le passage d'écoulement de gaz côté anode (16) est une nervure.

2. Pile à combustible selon la revendication 1, dans laquelle
le corps poreux métallique est un corps de métal expansé.

3. Pile à combustible selon la revendication 1, dans laquelle
une surface de contact ou un taux de contact du corps poreux de métal formant le passage d'écoulement de gaz côté cathode (18) est fixé dans chacune de trois portions du passage d'écoulement de gaz côté cathode (18), une portion amont (100a), une portion milieu (100b) et une portion aval (100c), et la surface de contact ou le taux de contact du corps poreux de métal est fixé pour être inférieur dans la portion aval (100c) que dans la portion milieu (100b) et inférieur dans la portion milieu (100b) que dans la portion amont (100a).

4. Pile à combustible selon l'une quelconque des revendications 1 à 3, dans laquelle
de l'eau qui est produite sur le côté cathode se déplace du passage d'écoulement de gaz côté cathode (18), à travers un assemblage d'électrode de membrane (10), vers le passage d'écoulement de gaz côté anode (16) sur l'aval du passage d'écoulement de gaz côté cathode (18), et se déplace également du passage d'écoulement de gaz côté anode (16), à travers l'assemblage d'électrode de membrane (10), vers le passage d'écoulement de gaz côté cathode (18) sur l'aval du passage d'écoulement de gaz côté anode (16), de sorte que la pile à combustible fonctionne dans un état non-humidifié dans lequel aucune humidification externe n'est réalisée.
